(19) Europäisches Patentamt / European Patent Office / Office européen des brevets

(11) **EP 3 354 454 B1**

(12) **EUROPEAN PATENT SPECIFICATION**

(45) Date of publication and mention
of the grant of the patent:
**09.09.2020 Bulletin 2020/37**

(21) Application number: **17153362.3**

(22) Date of filing: **26.01.2017**

(51) Int Cl.:
*B32B 5/02* *(2006.01)*        *B32B 5/18* *(2006.01)*
*B32B 5/24* *(2006.01)*        *B32B 5/26* *(2006.01)*
*B32B 27/12* *(2006.01)*

(54) **NOISE ABSORBING MULTILAYER SYSTEM FOR A VEHICLE**

GERÄUSCHABSORBIERENDES MEHRSCHICHTIGES SYSTEM FÜR EIN FAHRZEUG

SYSTÈME INSONORISANT MULTICOUCHES POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.08.2018 Bulletin 2018/31**

(73) Proprietor: **Autoneum Management AG
8406 Winterthur (CH)**

(72) Inventor: **Delmas, Bertrand
8406 Winterthur (CH)**

(56) References cited:
**WO-A1-2016/166218        DE-U1-202016 100 525
US-A1- 2004 180 177        US-A1- 2012 024 626**

# Description

## Technical Field

The invention is directed to a noise absorbing multilayer system for a vehicle, in particularly a trim part or cladding used for the interior of a vehicle, for instance as an inner dash or as a part of the floor covering or for the exterior of a vehicle, for instance as a trim part or cladding in the engine bay area, for instance as an outer dash or fire wall cladding, and the use of such a trim part in a car, as well as the method of production thereof.

## Background Art

It is known to use films for binding two fibrous layers. As these films stay impervious to air, the backing layer or layers cannot contribute to noise absorption. Therefore it is known to slit or perforate the film to obtain a pervious binder layer and enhance the overall absorption of the part.

Although this works in theory and in praxis well on flat samples, it becomes less effective on 3 D formed car parts. The material to form these trim parts are pressed in moulds and certain areas will stretch over the maximal stretching ability of the film, causing further opening of the originally formed perforations or slits or even tearing off the film. This will reduce the air flow resistance below the minimal required level for improved sound absorption, thereby locally deteriorating the acoustic performance. In addition it becomes difficult to fine tune the overall airflow resistance or to keep it constant as the production process becomes an unpredictable factor in the overall performance.

Combinations of thin film and nonwoven failed also to obtain an even acoustic performance over the trim part after the 3D moulding step. Nonwovens are unpredictable when stretched during the moulding process; they are also prone to tear and might even become impermeable by the adhesive closing the nonwoven.

WO 2016/166218 A1 discloses a noise absorbing multilayer trim comprising 3 consecutive layers, with a first fibrous layer and a second fibrous layer and a film layer between the first and the second fibrous layer.

EP 934180 A discloses a multilayer acoustic trim part with at least two layers whereby the top layer is compressed to form a micro porous stiffening layer having a total airflow resistance of between 500 Nsm$^{-3}$ to 2500 Nsm$^{-3}$ and an area weight of between 0.3 kg/m$^2$ and 2.0kg/m$^2$.

It is therefore the object of the invention to obtain noise absorbing multilayer system for a vehicle that is enhanced in the possibility to tune the airflow resistance over the entire surface of the moulded trim part without unwanted local differences.

## Summary of invention

This object is achieved by a noise absorbing multilayer system for a vehicle according to claim 1 and the method of producing such multilayer system according to claim 12 and the use of such a multilayer system in a vehicle according to claim 13. Preferred embodiments are defined in the dependent claims.

In particular, by a noise absorbing multilayer system comprising at least 3 consecutive layers, being a first fibrous layer (1) and a second fibrous layer (2) and an air flow resistive layer between the first and the second fibrous layer, characterised in that the air flow resistive layer is a combination of a knit fabric (4) and a thermoplastic resin material (3) whereby the thermoplastic resin material is at least partly penetrated in the knit fabric at least closing part of the pores of the knit fabric.

In a preferred solution the thermoplastic resin material is also at least partly penetrated in the first fibrous layer and in the second fibrous layer joining or laminating these layers to the airflow resistive layer.

Laminating is defined in the sense of bonding layers at least over the contact surface together.

Surprisingly the use of a knit fabric with a resin material partly penetrated through the openings of the knit fabric as claimed, forms an airflow resistive layer that is more predictable and uniform in its performance. As stretched knits keep their pattern and will not tear that easily, a more even airflow resistance can be obtained. Furthermore the pattern of the knit guides the resin material distribution during the production creating an even and predictable airflow resistance over the produced part.

The type of knit, the resin material as well as the material of both fibrous - the first and second - layers influence the air flow resistance obtained in the final product.

Preferably the resin material has a viscosity (defined by the melt flow index (MFI)) at the production temperature set that is sufficient to penetrate the knit first before wicking into the adjacent fibrous layer, so the main material will migrate towards and through the knit rather than disappear into the adjacent fibrous layer. This can be achieved by optimising the knit pattern as well as the MFI in combination with the melting temperature of the resin material and or by optimising the process parameters used.

A knit pattern with a combination of large openings and close or tightly knitted areas forming small openings is advantageously used. Such a knit pattern will give rise to areas defined by the large openings, where the resin material can flow more easily through the knit fabric and bind to the fibrous layer at the other side of the knit fabric. In other areas defined by smaller openings or tighter knit patterns, the resin material is more restricted in its flow and will stay more locally, binding to the second fibrous layer. As the resin material is staying around the knit but migrating in a direction perpendicular to the plane, a pervious structure is created by the combination of the knit fabric and the resin material forming an air flow resistive layer, with a substantially regular pattern.

This is further enhanced by an even distribution of the resin material over the at least one surface of the knit fabric during production, preferably using a film as basis for the resin material. Preferably the film is placed between the knit fabric and the second fibrous layer. During the production process the resin material is heated at least close to its melting temperature, and able to flow. At this molten stage, the thermoplastic material penetrates at least partially in the knit openings and through the knit openings in the first fibrous layer, as well as in the second fibrous layer. The penetration of the thermoplastic resin is preferably not extending over the thickness of the first and second fibrous layer, such that it is staining visible surfaces of the final product.

Preferably the knit fabric and one or both fibrous layers have a melting temperature, preferably a softening temperature which is higher than the melting temperature of the resin material or the binder of the first and or second fibrous layer or layers. The melting temperature of the knit and the fibrous materials might be roughly the same.

Preferably the melting temperature of the binder is lower than the melting temperature of the thermoplastic resin material.

Preferably the total airflow resistance of the trim part is between 500 and 6000 Ns.m$^{-3}$, preferably between 500 and 4000 Ns.m$^{-3}$, preferably between 1000 and 4000 Ns.m$^{-3}$, measured according to current ISO 9053, using the direct airflow method (method A).

The air flow resistive layer is flanked by two fibrous layers on either side of its surface, a first fibrous layer and a second fibrous layer.

Preferably a carded, cross lapped and eventually needled felt material, an air laid type felt or a spun bond or meltblown type felt might be used for the first and or second fibrous layer.

The preferred solutions may be used for the first and or second fibrous layer if nothing is indicated to the contrary.

The first and or second fibrous layer comprises filler fibers and eventually a binder, preferably in the form of binder fibers. Filler fibers are defined herein as any type of fibers that forms the bulk of the fibrous layer in the final product and is not melted during the production of the trim part.

The first or second fibrous layer might be a staple fibre or an endless filament felt layer. If the word "fibers" is used both types "staple fibers" and "endless filament" are meant.

The filler fibers comprise at least one material selected from the group consisting of reclaimed fibers, virgin natural fibers, like cotton, mineral fibers, preferably one of glass fibers or recycled glass fibers or basalt fibers or carbon fibers, or synthetic fibers selected from the group consisting of polyamide (nylon) such as polyamide 6 or polyamide 66, polyester such as polyethylene terephthalate (PET) or polybutylene terephthalate (PBT) or Polytrimethylene terephthalate (PTT), polyolefin, polypropylene and polyethylene or mixtures thereof.

Preferably the filler fibers may comprise reclaimed fibers made of at least one material selected from the group consisting of cotton shoddy, synthetic shoddy, polyester shoddy, natural fibre shoddy.

Reclaimed fibers are preferably produced from textile fabrics, preferably shoddy cotton, shoddy synthetic, shoddy polyester or shoddy natural fibers. The shoddy type is defined by having at least 51% by weight of the material included, 49% can be fibers from other sources. So for instance, shoddy polyester contains at least 51% by weight of polyester based materials. Alternatively, the shoddy material can be a mixture of different synthetic and natural fibers, whereby not one type is prevailing.

The fibers used may also come from a regenerated source, like for instance regenerated polyester.

The fibres used may have a solid cross section but also fibres with a hollow cross section might be preferred or a combination fibers with a hollow or a solid cross section. For instance to further enhance the durability and or to make the fibrous layer lighter and or loftier and or to fine tune the noise absorbing properties.

Surprisingly the use of a combination of frizzy fibers as part of the filler fibers makes it possible to increase the thickness at a lower density, while maintaining or even improving the acoustic performance. This enables a better filling of the space available without the need to add additional weight to the part. This might in particularly be advantageously used in the fibrous layer or layers adjacent the surface of the air flow restrictive layer facing away from the noise source.

The frizzy fiber is a side by side conjugate fiber also referred to as bicomponent fiber. The frizzy fibers, also referred to as curved or self-crimped fibers, are made for instance by two sides, of the conjugate fiber, and are arranged such that one side shrinks differently from the other side and thereby induces a permanent curved shaping of the filament or fiber away from the straight line, for instance in the form of spiral, omega or helical. However in most cases the shape is not necessarily a regular structure but irregular 3-dimensionally shaped versions are having the same advantage.

Preferably the conjugate material is chosen such that there is a difference in viscosity causing an inherent curling or frizzing in the fibre. However other types of conjugate fibers that show a similar effect as defined might be chosen as well.

Preferably any of the fibers used, for instance the frizzy fibers, binder fibers, filler fibers, reclaimed fibers, synthetic fibers, natural fibers or mineral fibers are staple fibers. The fibre length is preferably between 28 and 76 mm, preferably 32 to 64 mm.

The fibers are preferably between 1.7 and 28 dtex, preferably between 3 and 15 dtex, preferably between 3 and 12 dtex.

Any of the fibers used might origin from virgin or recycled or regenerated material.

Eventually foam chips might be mixed in at least one of the fibrous layers, preferably up to 30%, more preferred up to 25% of the total area weight of the layer. Preferably the foam is polyurethane foam, preferably soft polyurethane foam. The density of the foam is preferably between 10 and $100kg.m^{-3}$, preferably between 20 and $90kg.m^{-3}$, preferably between 25 and $85kg.m^{-3}$. The size of the shredded foam pieces is preferably between 2 and 20 mm, preferably between 3 and 15 mm, preferably between 4 and 10 mm.

Preferably the fibers in the layer are bonded by a thermoplastic binder. Preferably the binder material is in the form of fibers, flakes or powder. More preferably the binder material is one of a mono-component fiber or bi-component fiber.

As thermoplastic binder, preferably at least one of the materials selected from the group consisting of polyester such as polyethylene terephthalate, copolymers of polyester, polyolefin, polypropylene, polyethylene, polylactic acid (PLA) and polyamide such as polyamide 6 or polyamide 66 or their copolymers may be used.

For example as binder a low melt polyester or polyolefin, with a melt point lower than the filler fibres can be used. Preferably a polyester bi-component fibre is used for instance a fibre with a PET core and a Co-Polyester sheath, whereby only the sheath melts in order to achieve the bonding of the staple fibres.

Preferably at least one of the fibrous layers does not contain any binder.

Preferably at least 0-50% of binder, preferably between 10 and 40% of binder, ever more preferred between 20 and 30% of binder, for instance in the form of binder fibres are used.

The same types of binders may be used with comparable conditions for all fibrous layers.

Preferably the first and or second porous fibrous layer has an area weight between 80 and 2500 $g.m^{-2}$, preferably up to 1200 $g.m^{-2}$, preferably up to 1000 $g.m^{-2}$.

The first and second layer may have the same material composition. However the first and second fibrous layers might be differentiated based on their final function in the overall layering.

Adjacent at least one of the fibrous layers on the surface facing away from the air flow resistive layer additional layers can be used, for instance a foam layer, either slab foam or reaction injected foam, another fibrous layer, a thin nonwoven like a scrim or a closed or open film.

The first or second layer in particularly the one facing away from the noise may further comprise frizzy hollow conjugate fibers to enhance the compressional stiffness of the part. In addition these fibers help to better define 3 dimensional formed parts.

The fibrous layer forming the back layer - facing away from the noise source may have essentially constant area weight, with locally a variable density and thickness. This can be achieved preferably by compressing the thermoplastic fibrous layer during the moulding of the trim part to form the required shape, resulting in a product that is overall air permeable and functions as an acoustic absorbing lining that is light weight and keeps its structure during the lifetime of the product.

Alternatively the fibrous layer forming the back layer - facing away from the noise source, can have an essentially constant density and a variable area weight, for example the density of the porous fibrous layer is essentially constant at variable thickness.

The fibrous layer forming the back layer - facing away from the noise source with essentially constant density has preferable a density between 45 and 75 $kg/m^3$, preferably between 40 and 60 $kg/m^3$.

For instance when the fibrous mat is made on an injection fibre machine like for instance disclosed in EP 2640881 A, where the fibre mixture including the binder is fed in a cavity in the form of the final product, the fibre density is kept constant throughout the filling process giving rise to a porous fibrous layer shape that contains the necessary thickness variations with a variable area weight and an essentially constant density. This fibrous layer can either be directly consolidated on the machine as disclosed in the referenced patent or can be directly consolidated afterwards by feeding the form to a moulding device and consolidating the felt inside the mould.

Such a fibrous layer might be pre-bonded to keep the overall distribution of the fibrous material before combining it with the other layers to form the multilayer absorbing material and or part according to the invention.

Preferably the first fibrous layer has an area weight between 100 and 1700 $g/m^2$, preferably between 300 and 1500 $g/m^2$, preferably between 400 and 1300 $g/m^2$.

The thickness of the trim part is mostly depending on space restrictions in the vehicle. Preferably the thickness can be varied over the area of the part to follow the available space in the vehicle. Typical overall average thickness of inner dashes is normally between 15 and 25 mm.

Preferably the first or second fibrous layers has a thickness between 4 and 30 mm, preferably between 5 and 20 mm. Preferably the fibrous layer facing the noise is kept at a constant thickness of preferably between 2 and 8 mm while the lower fibrous layer facing away from the noise source is able to compensate to reach the required thickness required to form the 3 Dimensional shape of the trim part produced.

## Knit fabric

To obtain an air flow resistive layer according to the invention the knit fabric, pattern as well as coarseness of the yarn might have an influence on the final air flow resistance and may be used to fine tune the air flow resistance required for the end product.

The advantage of using a knit fabric rather than a nonwoven or perforated foil layer is that the openings in the fabric are produced during the production of the knitted fabric and are based on the knit pattern and the coarseness of the yarn as well as the process parameters chosen. This makes the amount and distribution of the openings controllable and not random like for nonwoven fabrics. Furthermore the opening is produced during the knitting process, hence the material itself is not further impaired to create the openings.

The knit fabric material is preferably polyester based, like polyethylene terephthalate (PET) or nylon based, preferably polyamide 6 or polyamide 6.6 or mixtures of such materials.

The pattern of the knit might be regular, preferably a warp knit, such as plain knit or interlock knit, or circular knit might be used. More preferably a knit with a pattern of different sized openings or with a combination of large openings and tightly knitted areas is used, for example an ajour type knit with a combination of large and small openings in a regular pattern. Ajour knits are based on the stitch transfer technique creating a pattern of openings in the knitted fabric. Other lace knitting fabrics, like filet knits, creating stable openings arranged in the fabric might be used as well.

The pattern can be chosen to further optimise the air flow resistance needed. For example if a lower air flow resistance is needed a more open knit might be chosen or the opposite if a higher air flow resistance is needed. However the same can be achieved by combining a pattern with large openings and tightly knitted areas. Preferably a combination of large and small openings in a regular pattern is chosen to obtain a basic air flow resistance that can be further tuned by the choice of the resin material.

Also a custom made knit might be used where the pattern is adapted to obtain different areas of air flow resistance within the final product using a combination of different patterns.

Different types of knits, patterns or textures, for instance warp, pique, interlock or jacquard as well as 3 dimensional types of knits might be used. Also the choice of the yarn for the knit as well as the yarn type - sleek or textured - has an influence on the apparent openness of the fabric.

To increase the overall stretch performance the fabric might comprise elastic yarn or yarn made of elastic fibers. The knitted fabric may comprise elastic yarn such that the fabric is stretchable in all directions of the plane in approximately equal amounts,

The knits used might be treated to prevent shrinkage and deforming for instance by a thermo fixation treatment of the knit and or a washing treatment. The washing step might also eliminate unwanted residues of the knitting process that may interfere with the later process steps, in particular with the resin migration step and or the lamination of the layers as such.

Preferably the knitted fabric has an area weight of between 10 and 150 g/m$^2$, preferably an area weight between 20 to 100g/m$^2$. More preferred the knit has an area weight in the range of between 25 and 80g/m$^2$.

Preferably the knit is made with yarn of between 15 and 150dtex, preferably between 20-100dtex. Preferably the knit is made with a knitting gauge between 3-80, preferably between 10-50.

**Thermoplastic material**

The thermoplastic resin used needs a defined viscosity to enable an even flow through at least the larger pores of the knit to reach the other side of the knit and bond to the first fibrous top layer. This can be achieved by selecting a resin material tuned to have the necessary viscosity at the process temperature used for the production of the noise absorbing multilayer and or a part including such a multilayer.

The MFI of the thermoplastic resin material should be chosen such that the resin is fully molten and flowing at the production temperature of the multilayer structure. In addition the MFI is depending on the pattern chosen for the knit. A knit with a pattern with large openings needs a lower MFI at production temperature than a knit with a pattern of substantially smaller openings. If the MFI is too low at the production temperature of the multilayer structure, the resin will not migrate through the knit and or migrate in the first and or second layer partly. While with a MFI that is too high, the resin will wick into the first and second layer completely and not stay inside the knit pattern. This might even cause a bleed through to the surface of the part which is unwanted from an aesthetic perspective.

In addition the MFI is depending on the target AFR. At a given knit pattern, a higher viscosity or lower MFI, will be chosen for High AFR, and the opposite for low AFR.

For example in combination with a pattern of large openings and small openings and a process temperature of between 230°C and 240°C, a resin with a melting range between 200 and 220°C, with a MFI measured at 230°C of around 35 may be used. However if a resin with an MFI measured at 210°C of around 35 is used the process temperature can be set between 200 and 210°C.

For example in combination with a pattern of small openings and a process temperature of between 230°C and 240°C, a thermoplastic resin with a MFI measured at 210°C of around 35 may be used.

The thermoplastic resin material has preferably a melting point of at least 20°C, preferably 40°C, higher than the melting point of the binder used in the first and second fibrous layer.

The thermoplastic resin material may comprise at least one of the polymers or copolymers selected from the group consisting of Polyester such as polyethylene terephthalate (PET) or polybutylene terephthalate (PTB) or copolyester (CoPES), polyamide such as polyamide 6 or polyamide 66, polyolefin such as a polyethylene (PE) or low density polyethylene (LDPE) or linear low density polyethylene (LLDPE) or high density polyethylene (HDPE), polypropylene (PP), thermoplastic elastomers (TPEs) such as thermoplastic polyolefin (TPO), thermoplastic polyurethane (TPU), polyetherimide, polysulfone, polyethersulfone, polyetheretherketone and copolymers such as ethylene vinyl acetate (EVA) or biopolymers such as polylactic acid.

The thermoplastic resin material is preferably provided in the form of a film, a hot melt coating, like a plain roll hot melt coating, or binding layer so an even distribution of the resin material is given.

Preferably the thermoplastic resin is used in the form of a single layer, bilayer or multilayer film.

Preferably the resin layer has a thickness between 25 and 200 micrometres, preferably between 40 and 100 micrometres, before the process step of penetration into the knit fabric.

In case of insufficient bonding between the knit fabric and one or both fibrous layers a bilayer or multilayer film might be used.

The thickness of the film can be adjusted such that the resin material distributes over the fibrous layers and the knit and becomes open to form together with the knit fabric the air flow resistive layer. If the film is too thick the material available would be enough to keep a closed layer, if the film is too thin there will not be enough resin penetrated through the knit and into the fibrous layers to form the laminate according to the invention.

The melt flow rate is measured according to ISO standard 1133-1. The procedure for determining MFI is as follows: A small amount of the polymer sample is taken in the specially designed MFI apparatus. A die with an opening of typically around 2 mm diameter is inserted into the apparatus. A piston is introduced which acts as the medium that causes extrusion of the molten polymer. The sample is preheated for a specified amount of time at the temperature indicated. After preheating a specified weight is introduced onto the piston. The weight exerts a force on the molten polymer and it immediately starts flowing through the die. A sample of the melt is taken after the desired period of time and is weighed accurately. MFI is expressed in grams of polymer per 10 minutes of duration of the test. Synonyms of Melt Flow Index are Melt Flow Rate and Melt Index. More commonly used are their abbreviations: MFI, MFR and MI.

Preferably the weight of the resin layer and the knit are of same order of magnitude.

Preferably the weight of the resin layer is between 25 and 200 g/m$^2$, most preferably between 40 and 120 g/m$^2$.

The trim part may further include blocks of for example expanded polypropylene (EPP) or expanded polystyrene (EPS) inserts. However these blocks should not be seen as part of an inner dash trim part according to the invention since they are used for other functions, such as crash pads, and do not necessarily contribute to the noise attenuation according to the invention, and might locally decrease the noise absorption.

The multilayer part according to the invention can be used as an interior trim part for instance as an inner-dash, or hush panel, as part of an interior flooring system, as an acoustic cladding, or as an engine bay trim part, for instance a hood liner, or outer-dash or as an outer or inner wheel arch liner.

A multilayer acoustic trim part according to the invention may further comprise additional layers, such as a covering scrim layer, an acoustic scrim layer, a decorative top layer, for instance a tufted or nonwoven carpet layer. To keep the benefit of the acoustic attenuation these additional layers should be air permeable at least on the side directed to the noise source.

Alternatively the first fibrous layer may be a surface layer with a nonwoven carpet layer being first fibrous layer.

## First embodiment

In a first embodiment the first or second fibrous layer facing the noise source might be further tuned to enhance the overall absorbing properties of the final part.

For instance the top layer may be compressed to form a first fibrous layer being a first air flow resistive layer having an airflow resistance of between 500 Nsm$^{-3}$ to 2500 Nsm$^{-3}$ and an area weight of between 0.3 kg/m$^2$ and 2.0kg/m$^2$, preferably between 500 and 1200 g/m$^2$. The air flow resistive layer formed by the combination of a knit fabric and a thermoplastic resin material, whereby the thermoplastic resin material is at least partly penetrated in the knit fabric at least closing part of the pores of the knit fabric, functions as a second air flow resistive layer as well as a bonding layer between the first and second fibrous layers. The second fibrous layer is formed underneath and forms the decoupling layer.

For instance the top layer might be an eventually needle punched airlay felt, forming a first fibrous layer. The air flow resistive layer according to the invention can be formed by a polyester knitted fabric with an ajour type knit pattern, combining large and small openings in a regular panel and a thermoplastic resin, formed to obtain an air flow resistance of between 500 and 1500 Nsm$^{-3}$. The back or decoupling layer, forming the second fibrous layer is formed from again an eventually needle punched air lay felt. This felt layer can be loftier than the first fibrous layer and might have an air flow resistance of around 300 to 700 Nsm$^{-3}$ and an area weight of preferably between 300 and 2000 g/m$^2$.

Preferably the first fibrous layer has an even thickness over the whole surface of the part, while the second fibrous layer might have a variable thickness, following the 3 dimensional structure needed for the final part.

Both the first and second fibrous layer might comprise between 20-60% by weight shoddy cotton, between 20-60% by weight frizzy fibers, and between 10-30% by weight of binder fibers, preferably bi component binder fibers, the total weight adding up to 100%. Both layers might comprise the same or similar material compositions.

Surprisingly the use of the airflow resistive layer according to the invention enables an even airflow resistance over the surface of the part due to the regularity of the knit fabric, while, at the same time, bonding both fibrous layers at either side of its surface. Bonding with other means known in the prior art might be prone to defects or create irregular total air flow resistance when measured on the part level.

Preferably all layers together - the first and second fibrous layer together with the air flow restive layer formed according to the invention, have a variable thickness such that at least for an area with a thickness between 4 and 12.5 mm the overall air flow resistance ($AFR_{overall}$) and the overall density $\overline{\varrho}$ relate as follows

$$1500 < AFR_{overall} - 10\overline{\varrho} < 3800$$

with $AFR_{overall}$ in $Nsm^{-3}$ and $\overline{\varrho}$ in $kg/m^3$.

The relations of

$$AFR_{overall} = 10{*}\overline{\varrho} + 1500$$

and

$$AFR_{overall} = 10{*}\overline{\varrho} + 3800$$

represent respectively the minimum and the maximum optimal value of the overall AFR as function of the overall density. The optimal overall AFR for three dimensional (3D) multilayer parts is between these two boundaries.

This means that at least for the part area with a thickness of between 4 mm and 12mm the overall AFR would fall within the defined range and such area would then contribute to the overall acoustic absorption of the part.

The overall air flow resistance would be the result of the air flow resistance values of the single layers laminated together.

**Second embodiment**

Automotive trim parts might be placed in areas of the car not visible to the owner or user of the car. These parts may not have a requirement for an aesthetic surface. In these cases the top fibrous layer, directed towards the noise source might be minimised in thickness and or area weight. For instance by using a thicker scrim layer rather than a felt layer. For instance a spunbond, meltblown or spunlace nonwoven or a thin fibre felt layer, preferably with an area weight of between 100 and 300

$g/m^2$. The layer should be thin enough to enable the forming of the airflow resistive layer. In particularly binding some of the resin passing through the knitted fabric, preventing it from becoming impervious "plasticised" areas on top of the knit fabric.

Surprisingly the fibrous layer, preferably including frizzy fibers in combination with the airflow resistive layer according to the invention enhances the noise attenuation. Due to the impedance difference between the porous fibrous layer and the airflow resistive layer, the noise attenuation, and especially the noise absorption, is improved. In order to increase the noise absorption the air resistive layer should not have a too high airflow resistance (AFR) reflecting the noise, however the airflow resistive layer should also not have too low AFR since then it will have no, or very little effect on the absorption.

Preferably the total airflow resistance of the trim part is between 500 and 7000 $Ns.m^{-3}$, preferably between 1000 and 4000 $Ns.m^{-3}$, measured according to current ISO 9053, using the direct airflow method (method A).

Preferably the second fibrous layer has an area weight between 200 and 2000 $g.m^{-2}$, preferably between 400 and 1200 $g.m^{-2}$, preferably between 500 and 1000 $g.m^{-2}$.

Preferably the second fibrous layer consists of 10 to 40% of binder, 10 to 70% of filler fibers and 10 to 70% of frizzy fibers and wherein the total amount adds to 100% by weight.

The second fibrous layer may have a variable density and or variable area weight over the part.

The second fibrous layer may have essentially constant area weight, with locally a variable density and thickness. This can be achieved preferably by compressing the thermoplastic fibrous layer during the moulding of the trim part to form the required shape, resulting in a product that is overall air permeable and functions as an acoustic absorbing lining that is light weight and keeps its structure during the lifetime of the product.

Alternatively the second fibrous layer can have an essentially constant density and a variable area weight, for example the density of the porous fibrous layer is essentially constant at variable thickness.

The second fibrous layers with essentially constant density has preferable a density between 45 and 75 $kg/m^3$, preferably between 40 and 60 $kg/m^3$.

For instance when the fibrous mat is made on an injection fibre machine like for instance disclosed in EP 2640881 A, where the fibre mixture including the binder is fed in a cavity in the form of the final product, the fibre density is kept constant throughout the filling process giving rise to a porous fibrous layer shape that contains the required thickness variations with a variable area weight and an essentially constant density. This fibrous layer can either be directly consolidated on the machine as disclosed in the referenced patent or can be directly consolidated afterwards by feeding the form to a moulding device and consolidating the felt inside the mould.

## Production process

In the following, possible production processes will be explained in more detail. However, a skilled person might also be expected to know how to use alternative processes to come to a similar result.

The different fibres are blended in the advantageous combination according to the teachings of the invention and the properties needed for the specific part, such that the fibers are evenly blended throughout the material formed. The blended fibres are formed in a mat, by known technologies available on the market. Preferably by using a card or garnet, which gives a more orientated fibre material or by using an air-lay process, for instance using a Rando-Webber or other known air lay machine, which gives a more random laid web or mat. The thus obtained web or mat can be further processed in a continuous process. If there is a need for later processing the web or mat formed can be consolidated (binding the fibers to form bonded fibrous material) for instance in a thermal process step or by using needling. Needling is not preferred for fibrous webs or mats containing the frizzy self-crimped fibers, since it has a negative impact on the loftiness and resilience of the layer obtained.

The thus formed fibrous felt materials may be used for the multilayer system according to the invention.

A general method of production might be including at least the following consecutive steps:

• Stacking the materials, in particular at least one fibrous layer, the thermoplastic resin layer and knit fabric. Whereby the thermoplastic resin layer is placed in between and in surface contact with the second fibrous layer and the knit fabric;
• Heating the stacked layers preferably from the side of the knit fabric, such that the at least resin film layer is heated to at least the temperature corresponding to the desired viscosity;
• Preferably in a separate step, heating of at least one surface of the other fibrous layer;
• Combining the heated materials of step 1 and step 3 such that the heated surface of the other fibrous layer and the heated surface of the knit fabric are in surface contact with each other and subjecting the as such stacked layers to pressure perpendicular to the surface, such that the resin material is forced to penetrate at least part of the openings of the knit fabric and partly into the first and second fibrous layer, thereby forming the air flow resistive layer and laminating all layers together forming a multilayer material.

Preferably step 4 is done using pressing means for instance through a set of rollers, whereby the gap between the rollers is smaller than the height of the stacked material.

The material coming from step 4 can be made as roll goods material, also known as semi-finished material. This roll goods material can be cut and moulded to form an automotive trim part in additional steps, eventually combined with additional layers for instance at the side of the second fibrous layer.

For the production of the final trim part, hot and/or cold moulding processes can be used. An example of such a process can be a combination of preheating the material in a hot air oven followed by a cold moulding step to obtain the 3 D shaped trim part. Preferably the melting temperature of the resin, the binder and the fibers used are chosen such that the final air flow resistance of the air flow resistive layer is in the required range.

## Brief description of the drawings

Figure 1 shows a schematic layout for a construction according to the invention.
Figure 2 shows a simple knit fabric structure
Figure 3 shows examples of preferred knit fabric patterns
Figure 4 A-C shows examples of possible layouts according to the invention
Figure 5 shows a representation of a possible production process of the multilayer material according to the invention

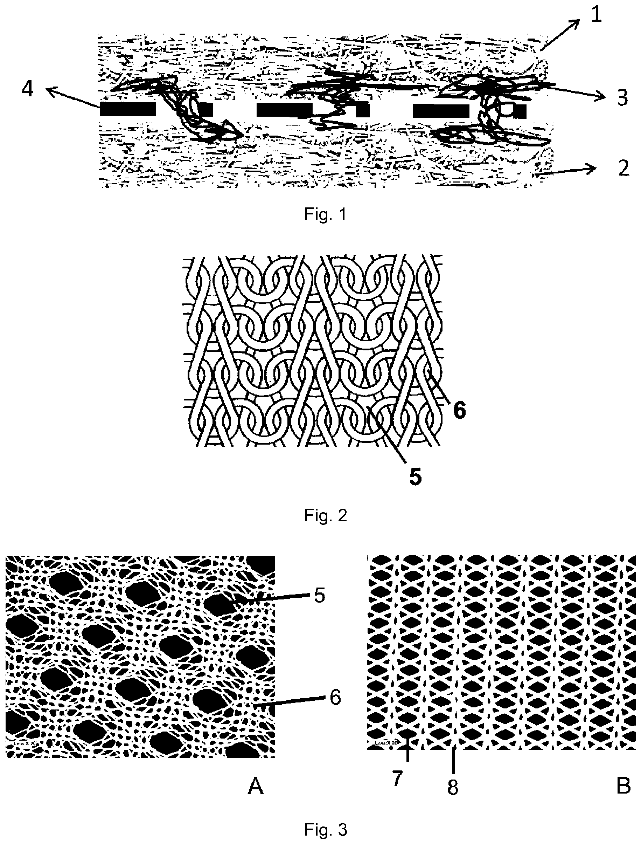

Figure 1 shows a noise absorbing multilayer comprising at least 3 consecutive layers, with a first fibrous layer (1) and the second fibrous layer (2) and an air flow resistive layer between the first and the second fibrous layer, whereby the air flow resistive layer is a combination of a knit fabric (4) and a thermoplastic resin material (3), with the thermoplastic resin material being at least partly penetrated in the knit fabric at least closing part of the pores of the knit fabric. Depending on the amount of openings blocked, the air flow resistance can be fine-tuned. Openings may be fully blocked or just partially blocked.

Preferably the resin material is also partly penetrating in the first and or second fibrous layer laminating (bonding) all 3 layers together as shown.

In figure 2 and 3 examples of knitted fabrics are given. The knit pattern might influence the resin migration and therefore the air flow resistance obtained. The openness of a knit fabric may be influenced by the knitting machine gauge and the yarn size. For example a 32 gauge knit using a 84dtex yarn may have an open area of between 20 and 45% on average. Figure 2 shows a simple knit pattern with openings in the fabric (5, 6).

Figure 3 A and B show examples of knit patterns that might be used. Figure 3A shows a tricot mesh knit with large openings (5) combined with areas with a tight knit with small openings (6). The resin material might migrate through the large openings, but migration is mostly inhibited by the tightly knit areas. Figure 3B shows an example of net structure knit with a combination of large openings (7) and small openings (8) in a regular distribution.

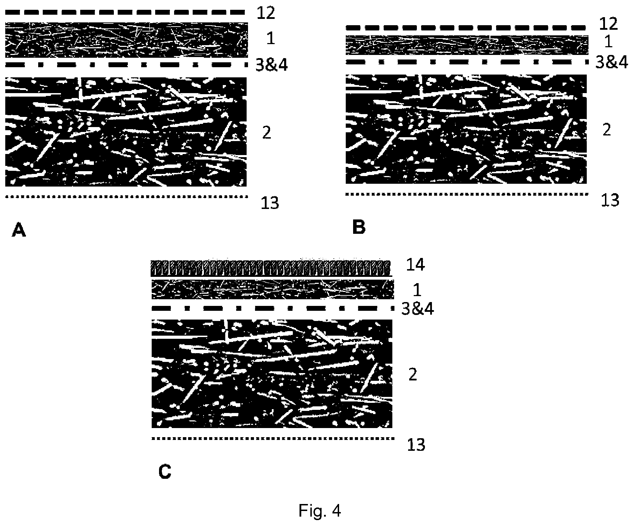

Figure 4 A to C shows examples of possible layouts. Figure 4A shows a basic layout for an automotive trim part incorporating the multilayer material according to the invention comprising at least 3 consecutive layers, with a first fibrous layer (1) and a second fibrous layer(2) and an air flow resistive layer between the first and the second fibrous layer. The air flow resistive layer is a combination of a knit fabric (4) and a thermoplastic resin material (3) whereby the thermoplastic resin material is at least partly penetrated in the knit fabric at least closing part of the pores of the knit fabric.

The surface of the first fibrous layer facing away from the air flow resistive layer may have at least an additional air pervious layer (12), preferably one of a tufted carpet, a nonwoven scrim layer such as a meltblown, spunbond, spunlace or thin felt layer. Also the surface on the opposite surface of the multilayer might be laminated to at least one additional layer (13), either the same as for the air pervious layer (12) or at least one of a closed or open film or foil layer, an open cell foam layer or an additional felt layer.

In figure 4B the layering might be the same as in figure A, however in this case the first fibrous layer is compressed to obtain an additional higher air flow resistance and to further enhance and or fine tune the acoustic attenuation properties of the produced trim part.

Figure 4C shows the same layout as figure 4B, however in this case the additional top layer is replaced with a tufted carpet system, preferably formed by yarn tufted in a primary backing and covered by a secondary backing, however the first fibrous layer might also form the secondary backing of the carpet construction. Surprisingly the acoustic absorption of a flooring system for a vehicle based on such a construction is enhanced.

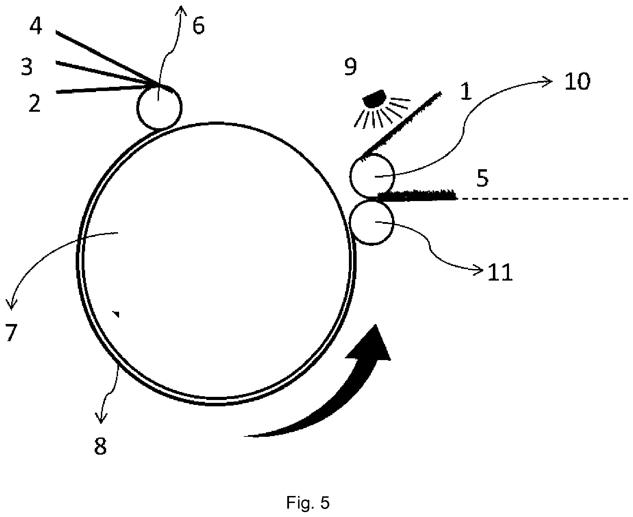

Figure 5 shows a possible process and machine set up for the production of the multilayer material according to the invention.

The second fibrous layer that may form a back layer in the final product (2) the thermoplastic resin film (3) and the knit fabric (4) are guided over rolls (6) to a hot drum (7) heated to a pre-set temperature to heat preferably all 3 layers, but at least the knit fabric and resin layer, preferably without adding pressure on the layers. One surface of the knit fabric is in direct contact with the hot drum, and the other side or surface is in direct contact with the thermoplastic resin film. The other side of the film is in direct contact to the second fibrous layer. The heating time is mainly dependent on the drum temperature and the thickness of the knit fabric and film layer as heating of the second fibrous layer throughout the entire thickness is not necessary.

Only a small thickness of the second fibrous layer needs to be heated to enable the flow into the top surface of this layer and achieve at least preliminary adhesion of this layer to the other 2 layers. The layers are heated with minimal pressure in the direction perpendicular to the plane of the surface of the layers to prevent migration of the thermoplastic resin material.

The hot drum temperature should be chosen such that at least the thermoplastic resin material is heated to obtain the temperature corresponding to the desired viscosity. The viscosity is dependent on the melt flow index of the thermoplastic resin in combination with the temperature reached.

Eventually via a second guiding roller, the first fibrous layer (1) is introduced. The first fibrous layer is preferably heated at the surface that will face the knit fabric, for instance with an infrared heater (9) or another hot drum. As with the second fibrous layer also this layer does not need to be heated throughout the thickness of the material, but only at the area of direct contact with the knit fabric to prevent instant cooling of the stacked layers in particularly of the resin material.

The first fibrous layer and the at least 3 layers are brought in direct contact, with the knit fabric facing the heated side of the first fibrous layer, and are guided through nip rollers 10 and 11. The gap between the nip rollers is such that a given pressure is put on the 4 layers perpendicular to the surface of the layers. By putting pressure on the layers, the molten resin of the film layer is forced to flow. The way of least resistance for the resin is through the knitted fabric, mainly through the larger openings of the pattern; therefore the resin material will migrate through the knitted fabric predominantly and bleed into the first fibrous layer. A small amount however will also bleed into the second fibrous layer. The openings of the knit fabric will be at least partly closed by the resin material, while at the same time, due to the migration of the resin, the originally closed film will disintegrate. Therefore, an air flow resistant layer is formed by the combined resin and knit fabric. Some of the resin material might penetrate the yarn material of the knit fabric without impairing the overall inventive idea presented. As the heating is not continued during or after the passage through the nip rollers, the material will cool down and further migration of the resin material is stopped before it can fully bleed in the first and or second fibrous layer. So part of the thermoplastic resin material will stay inside the knit fabric.

In a second process the multilayer material obtained can be heated at least at one side, preferably at the surface of the second fibrous layer, and cold moulded in a 3 dimensional shape, for instance to form a carpet flooring system for a vehicle or an inner dash panel. Alternatively a carpet flooring system can be formed by hot moulding the multilayer material according to the invention. Additional layers may be used on the surface of the second fibrous layer not in contact with the air flow resistive layer, further enhancing the overall performance of the trim part. For instance at least one of a film layer, open cell foam layer, additional felt layer, nonwoven scrim layer might be used. Materials for other purposes like impact might be integrated in the flooring system, for instance crash pads in the form of block foam. The multilayer system might be used also in combination with for instance a hard plastic shell forming a spacer for a raised flooring system.

Due to the use of a knitted fabric the air flow resistive layer formed is elastic and flexible and moulding in a 3D shape, even for more extreme forms, is possible. Surprisingly this does not impair the air flow resistance locally in high stretched areas, resulting in a trim part or cladding, for example a vehicle flooring system, having an constant noise absorption over substantially the whole surface of the part.

The nonwoven acoustic material can be used for the main flooring of a vehicle, as loose mats, as cover of the inner dash area in the foot well. However also as acoustic carpet surface layer on parcel shelves, in the trunk or other areas where a combination of an acoustic absorbing layer together with a nonwoven carpet surface layer might be used.

## Claims

1. Noise absorbing multilayer trim part comprising at least 3 consecutive layers, with a first fibrous layer (1) and a second fibrous layer (2) and an air flow resistive layer between the first and the second fibrous layer, **characterised in that** the air flow resistive layer is a combination of a knit fabric (4) and a thermoplastic resin material (3) and whereby the thermoplastic resin material is at least partly penetrated in the knit fabric at least closing part of the pores of the knit fabric.

2. Noise absorbing multilayer trim part according to claim 1, wherein the total airflow resistance of the trim part is between 500 and 7000 $Ns.m^{-3}$, preferably between 1000 and 4000 $Ns.m^{-3}$.

3. Noise absorbing multilayer trim part according to claim 1, whereby all layers together have a variable thickness **characterized in that** at least for an area with a thickness between 4 and 12.5 mm the overall air flow resistance ($AFR_{overall}$) and the overall density $\overline{\varrho}\,^{i}$ relate as follows

$$1500 < AFR_{overall} -10\overline{\varrho}\,^{} < 3800$$

with $AFR_{overall}$ in $Nsm^{-3}$ and $\overline{\varrho}\,^{i}$ in $kg/m^3$.

4. Noise absorbing multilayer trim part according to claim 1, whereby all layers together have a variable thickness **characterized in that** at least for an overall density above 250 $kg/m^3$ the overall air flow resistance ($AFR_{overall}$) and the overall density $\overline{\varrho}\,^{i}$ relate as follows

$$1500 < AFR_{overall} -10\overline{\varrho}\,^{} < 3800$$

with $AFR_{overall}$ in $Nsm^{-3}$ and $\overline{\varrho}\,^{i}$ in $kg/m^3$.

5. Noise absorbing multilayer trim part according to claim 3 or claim 4 whereby the air flow resistance of the first or second fibrous layer facing the source of noise and the intermediate layer together represents at least 55% of the overall AFR of the multilayer, preferably between 65% and 80% of the overall AFR of the multilayer.

6. Noise absorbing multilayer trim part according to one of the preceding claims, whereby the thermoplastic resin material is also at least partly penetrated in the first fibrous layer and in the second fibrous layer joining or laminating these layers to the airflow resistive layer.

7. Noise absorbing multilayer trim part according to one of the preceding claims wherein the resin comprises at least one of the polymers or copolymers selected from the group consisting of Polyester such as polyethylene terephthalate (PET) or polybutylene terephthalate (PTB) or copolyester (CoPES), polyamide such as polyamide 6 or polyamide 66, polyolefin such as a polyethylene (PE) or low density polyethylene (LDPE) or linear low density polyethylene (LLDPE) or high density polyethylene (HDPE), ethylene acrylic acid copolymers (EAA), polypropylene (PP), thermoplastic elastomers (TPEs) such as thermoplastic polyolefin (TPO), thermoplastic polyurethane (TPU), polyetherimide, polysulfone, polyethersulfone, polyetheretherketone and copolymers such as ethylene vinyl acetate (EVA) or biopolymers such as polylactic acid.

8. Noise absorbing multilayer trim part according to one of the preceding claims whereby the thermoplastic resin material is provided in the form of a film, a hot melt coating, or binding layer.

9. Noise absorbing multilayer trim part according to one of the preceding claims whereby at least one of the fibrous layers comprises a mixture consisting of 10 to 40% by weight of binder, preferably in the form of fibers, 10 to 70% by weight of filler fibers wherein the total amount adds to 100% by weight.

10. Noise absorbing multilayer trim part according to one of the preceding claims whereby at least one of the fibrous layers comprises a mixture of fibers consisting of 10 to 40% by weight of binder fibers, 10 to 70% by weight of staple fibers and 10 to 70% by weight of self-crimped fibers wherein the total amount of said fibers adds to 100% by weight.

11. Noise absorbing multilayer trim part according to one of the preceding claims whereby at least one of the fibrous layers comprises a mixture of fibers consisting of 10 to 40% by weight of binder fibers, 10 to 70% by weight of recycled fibers and 10 to 70% by weight of synthetic fibers wherein the total amount of said fibers adds to 100% by weight.

12. Method of producing the multilayer of one of the claims 1 to 11 comprising at least the consecutive steps of

    - stacking the materials, in particular at least the second fibrous layer, thermoplastic resin layer and knit fabric, whereby the thermoplastic resin layer is placed in between and in surface contact with the second fibrous layer and the knit fabric;
    - heating the stacked layers preferably from the side of the knit fabric, such that the at least resin film layer is heated to at least the temperature corresponding to the desired viscosity;
    - heating of at least one surface of the first fibrous layer being the nonwoven carpet surface layer;
    - combining the heated materials of step 1 and step 3 such that the heated surface of the first fibrous layer and the heated surface of the knit fabric are in surface contact with each other and subjecting the as such stacked layer to pressure perpendicular to the surface, such that the resin material is forced to migrate through at least part of the voids of the knit fabric and partly in the first and second fibrous layer, thereby forming the air flow resistive layer and laminating all layer together.

13. Use of the multilayer acoustic trim part according to one of the preceding claims as an interior trim part for instance as an inner-dash, as part of an interior flooring system, or as an inner wheel house lining or as an acoustic cladding, or as an engine bay trim part, for instance a hood liner or outer-dash.

**Patentansprüche**

1. Geräuschabsorbierendes, mehrschichtiges Verkleidungsteil, umfassend wenigstens 3 aufeinander folgende Schichten, mit einer ersten Faserschicht (1) und einer zweiten Faserschicht (2) und einer Luftströmungswiderstand-Schicht zwischen der ersten und der zweiten Faserschicht, **dadurch gekennzeichnet, dass** die Luftströmungswiderstands-Schicht eine Kombination aus einem Gestrick (4) und einem thermoplastischen Harzmaterial (3) ist, und wobei das thermoplastische Harzmaterial wenigstens teilweise in das Gestrick eingedrungen ist und wenigstens einen Teil der Poren des Gestricks schließt.

2. Geräuschabsorbierendes, mehrschichtiges Verkleidungsteil nach Anspruch 1, wobei der Gesamt-Luftströmungswiderstand des Verkleidungsteils zwischen 500 und 7000 Ns.m-3 liegt, vorzugsweise zwischen 1000 und 4000 Ns.m-3.

3. Geräuschabsorbierendes, mehrschichtiges Verkleidungsteil nach Anspruch 1, wobei alle Schichten zusammen eine variable Dicke aufweisen, **dadurch gekennzeichnet, dass** wenigstens für einen Bereich mit einer Dicke zwischen 4 und 12,5 mm für den Gesamt-Luftströmungswiderstand (AFRoverall) und die Gesamtdichte $\overline{\rho}$ folgende Beziehung gilt $1500 < \text{AFRoverall} - 10\overline{\rho} < 3800$ mit AFRoverall in Nsm-3 und $\overline{\rho}$ in kg/m3.

4. Geräuschabsorbierendes, mehrschichtiges Verkleidungsteil nach Anspruch 1, wobei alle Schichten zusammen eine variable Dicke aufweisen, **dadurch gekennzeichnet, dass** wenigstens für eine Gesamtdichte über 250 kg/m3 für den Gesamt-Luftströmungswiderstand (AFRoverall) und die Gesamtdichte $\overline{\rho}$ folgende Beziehung gilt $1500 < \text{AFRoverall} - 10\overline{\rho} < 3800$ mit AFRoverall in Nsm-3 und $\overline{\rho}$ in kg/m3.

5. Geräuschabsorbierendes, mehrschichtiges Verkleidungsteil nach Anspruch 3 oder Anspruch 4, wobei der Luftströmungswiderstand der ersten oder zweiten Faserschicht, die der Geräuschquelle zugewandt ist, und der Zwischenschicht zusammen wenigstens 55% des Gesamt-AFR der Mehrfachschicht ausmacht, vorzugsweise zwischen 65% und 80% des Gesamt-AFR der Mehrfachschicht.

6. Geräuschabsorbierendes, mehrschichtiges Verkleidungsteil nach einem der vorstehenden Ansprüche, wobei das thermoplastische Harzmaterial auch wenigstens teilweise in die erste Faserschicht und in die zweite Faserschicht eingedrungen ist, diese Schichten mit der Luftströmungswiderstands-Schicht verbindend oder laminierend.

7. Geräuschabsorbierendes, mehrschichtiges Verkleidungsteil nach einem der vorstehenden Ansprüche, wobei das Harz wenigstens eines der Polymere oder Copolymere umfasst, ausgewählt aus der Gruppe bestehend aus Polyester, wie Polyethylenterephthalat (PET) oder Polybutylenterephthalat (PTB) oder Copolyester (CoPES), Polyamid, wie Polyamid 6 oder Polyamid 66, Polyolefin wie ein Polyethylen (PE) oder Polyethylen niedriger Dichte (LDPE) oder lineares Polyethylen niedriger Dichte (LLDPE) oder Polyethylen hoher Dichte (HDPE), Ethylen-Acrylsäure-Copolymere (EAA), Polypropylen (PP), thermoplastische Elastomere (TPEs) wie thermoplastisches Polyolefin (TPO), thermoplastisches Polyurethan (TPU), Polyetherimid, Polysulfon, Polyethersulfon, Polyetheretherketon und Copolymere wie Ethylenvinylacetat (EVA) oder Biopolymere wie Polymilchsäure.

8. Geräuschabsorbierendes, mehrschichtiges Verkleidungsteil nach einem der vorstehenden Ansprüche, wobei das thermoplastische Harzmaterial in Form eines Films, einer Heißschmelzbeschichtung oder einer Bindeschicht bereitgestellt wird.

9. Geräuschabsorbierendes, mehrschichtiges Verkleidungsteil nach einem der vorstehenden Ansprüche, wobei wenigstens eine der Faserschichten ein Gemisch bestehend aus 10 bis 40 Gew.-% Bindemittel umfasst, vorzugsweise in Form von Fasern, 10 bis 70 Gew.-% Füllfasern, wobei sich die Gesamtmenge zu 100 Gew.-% addiert.

10. Geräuschabsorbierendes, mehrschichtiges Verkleidungsteil nach einem der vorstehenden Ansprüche, wobei wenigstens eine der Faserschichten ein Fasergemisch umfasst, das aus 10 bis 40 Gew.-% Bindefasern, 10 bis 70 Gew.-% Stapelfasern und 10 bis 70 Gew.-% selbstgekräuselten Fasern besteht, wobei sich die Gesamtmenge der Fasern zu 100 Gew.-% addiert.

11. Geräuschabsorbierendes, mehrschichtiges Verkleidungsteil nach einem der vorstehenden Ansprüche, wobei wenigstens eine der Faserschichten ein Fasergemisch umfasst, das aus 10 bis 40 Gew.-% Bindefasern, 10 bis 70 Gew.-% recycelten Fasern und 10 bis 70 Gew.-% synthetischen Fasern besteht, wobei sich die Gesamtmenge der Fasern zu 100 Gew.-% addiert.

12. Verfahren zur Herstellung der Mehrfachschicht nach einem der Ansprüche 1 bis 11, umfassend wenigstens die aufeinanderfolgenden Schritte eines

- Stapelns der Materialien, insbesondere wenigstens der zweiten Faserschicht, der thermoplastischen Harzschicht und des Gestricks, wobei die thermoplastische Harzschicht zwischen und in Oberflächenkontakt mit der zweiten Faserschicht und dem Gestrick platziert wird;
- Erwärmens der gestapelten Lagen vorzugsweise von der Seite des Gestricks aus, so dass wenigstens die Harzfilmschicht wenigstens auf die Temperatur erwärmt wird, die der gewünschten Viskosität entspricht;
- Erwärmens wenigstens einer Oberfläche der ersten Faserschicht, welche der Vlies-Teppich Oberflächenschicht ist;
- Kombinierens der erwärmten Materialien von Schritt 1 und Schritt 3, so dass die erwärmte Oberfläche der ersten Faserschicht und die erwärmte Oberfläche des Gestricks in Oberflächenkontakt miteinander sind und eines Beaufschlagens der als solche gestapelten Schicht mit Druck senkrecht zu der Oberfläche derart, dass das Harzmaterial gezwungen wird, durch wenigstens einen Teil der Hohlräume des Gestricks und teilweise in die erste und zweite Faserschicht zu wandern, wodurch die Luftströmungswiderstand-Schicht ausgebildet wird und alle Schichten miteinander laminiert werden.

13. Verwendung des mehrschichtigen Akustik-Verkleidungsteils nach einem der vorstehenden Ansprüche als Interieur-Teil, zum Beispiel als Innenverkleidung, als Teil eines Innenfußbodensystems, oder als innere Radhausauskleidung oder als Akustikverschalung, oder als Motorraum-Verkleidungsteil, zum Beispiel als Motorhauben-Auskleidung oder Außenverkleidung.

**Revendications**

1. Pièce de garniture insonorisante multicouches contenant au moins 3 couches consécutives, à savoir une première couche fibreuse (1) et une seconde couche fibreuse (2) et une couche résistante à l'écoulement d'air entre les première et seconde couches fibreuses, **caractérisée en ce que** la couche résistante à l'écoulement d'air est une combinaison d'un tissu tricoté (4) et d'un matériau en résine thermoplastique (3) et de telle sorte que le matériau en résine thermoplastique pénètre au moins partiellement dans le tissu tricoté, ce qui ferme au moins une partie des pores du tissu tricoté.

2. Pièce de garniture insonorisante multicouches selon la revendication 1, dans laquelle la résistance totale à l'écoulement d'air de la pièce de garniture est comprise entre 500 et 7000 Ns.m$^{-3}$, de préférence entre 1000 et 4000 Ns.m$^{-3}$.

3. Pièce de garniture insonorisante multicouches selon la revendication 1, dans laquelle toutes les couches réunies ont une épaisseur variable **caractérisée en ce que**, au moins pour une zone ayant une épaisseur comprise entre 4 et 12,5 mm, la résistance totale à l'écoulement d'air (AFR$_{overall}$) et la densité totale $\overline{\varrho}$ présentent une relation telle que

$$1500 < AFR_{overall} - 10\overline{\varrho} < 3800,$$

$AFR_{overall}$ étant exprimée en $Ns.m^{-3}$ et $\overline{\varrho}$ en $kg/m^3$.

4. Pièce de garniture insonorisante multicouches selon la revendication 1, dans laquelle toutes les couches réunies ont une épaisseur variable **caractérisée en ce que**, au moins pour une densité totale supérieure à 250 $kg/m^3$, la résistance totale à l'écoulement $\overline{\varrho}$ d'air ($AFR_{overall}$) et la densité totale $\overline{\varrho}$ présentent une relation telle que

$$1500 < AFR_{overall} - 10\overline{\varrho} < 3800,$$

$AFR_{overall}$ étant exprimée en $Ns.m^{-3}$ et $\overline{\varrho}$ en $kg/m^3$.

5. Pièce de garniture insonorisante multicouches selon la revendication 3 ou la revendication 4, dans laquelle la résistance à l'écoulement d'air de la première ou de la seconde couche fibreuse orientée vers la source de bruit et de la couche intermédiaire réunies représente au moins 55 % de l'AFR totale de la pièce multicouche, de préférence entre 65 % et 80 % de l'AFR totale de la pièce multicouche.

6. Pièce de garniture insonorisante multicouches selon l'une quelconque des revendications précédentes, dans laquelle le matériau en résine thermoplastique pénètre également au moins partiellement dans la première couche fibreuse et dans la seconde couche fibreuse, ce qui assemble ou stratifie ces couches avec la couche résistante à l'écoulement d'air.

7. Pièce de garniture insonorisante multicouches selon l'une quelconque des revendications précédentes, dans laquelle la résine est constituée d'au moins un des polymères ou des copolymères sélectionnés dans le groupe comprenant un polyester, tel que le polyéthylène téréphtalate (PET), le polybutylène téréphtalate (PTB) ou le copolyester (CoPES), un polyamide tel que le polyamide 6 ou le polyamide 66, une polyoléfine telle que le polyéthylène (PE), le polyéthylène à faible densité (LDPE), le polyéthylène à faible densité linéaire (LLDPE) ou le polyéthylène à haute densité (HDPE), des copolymères d'éthylène-acide acrylique (EAA), un polypropylène (PP), des élastomères thermoplastiques (TPE) tels que la polyoléfine thermoplastique (TPO), le polyuréthane thermoplastique (TPU), le polyétherimide, le polysulfone, le polyéthersulfone, le polyétheréthercétone et des copolymères tels que l'éthylène-acétate de vinyle (EVA) ou des biopolymères tels que l'acide polylactique.

8. Pièce de garniture insonorisante multicouches selon l'une quelconque des revendications précédentes, dans laquelle le matériau en résine thermoplastique est produit sous la forme d'un film, d'un revêtement thermofusible ou d'une couche de liaison.

9. Pièce de garniture insonorisante multicouches selon l'une quelconque des revendications précédentes, dans laquelle au moins une des couches fibreuses contient un mélange constitué de 10 à 40 % en poids d'un liant, de préférence sous la forme de fibres et de 10 à 70 % en poids de fibres de charge, la quantité totale s'additionnant de façon à atteindre 100 % en poids.

10. Pièce de garniture insonorisante multicouches selon l'une quelconque des revendications précédentes, dans laquelle au moins une des couches fibreuses contient un mélange de fibres constitué de 10 à 40 % en poids de fibres liantes, de 10 à 70 % en poids de fibres discontinues et de 10 à 70 % en poids de fibres auto-frisées, la quantité totale desdites fibres s'additionnant de façon à atteindre 100 % en poids.

11. Pièce de garniture insonorisante multicouches selon l'une quelconque des revendications précédentes, dans laquelle au moins l'une des couches fibreuses contient un mélange de fibres constitué de 10 à 40 % en poids de fibres liantes, de 10 à 70 % en poids de fibres recyclées et de 10 à 70 % en poids de fibres synthétiques, la quantité totale desdites fibres s'additionnant de façon à atteindre 100 % en poids.

12. Procédé de production de la pièce multicouche selon l'une quelconque des revendications 1 à 11, comprenant au moins les étapes consécutives consistant à :

    - empiler les matériaux, en particulier au moins la seconde couche fibreuse, la couche en résine thermoplastique et le tissu tricoté, de telle façon que la couche en résine thermoplastique soit placée entre et soit en contact superficiel avec la seconde couche fibreuse et le tissu tricoté ;
    - chauffer les couches empilées de préférence par le côté du tissu tricoté, de telle façon qu'au moins la couche de film en résine soit chauffée à au moins la température correspondant à la viscosité souhaitée ;
    - chauffer au moins une surface de la première couche fibreuse constituant la couche de surface de tapis non tissé ;
    - combiner les matériaux chauffés de l'étape 1 et l'étape 3 de telle façon que la surface chauffée de la première couche fibreuse et la surface chauffée du tissu tricoté soient en contact superficiel l'une avec l'autre et soumettre la couche empilée de la sorte à une pression perpendiculaire à la surface, de telle façon que le matériau en résine soit contraint de migrer à travers au moins une partie des vides du tissu tricoté et en partie dans la première et la seconde couche fibreuse, ce qui permet ainsi de former la couche résistante à l'écoulement d'air et de stratifier toutes les couches ensemble.

13. Utilisation de la pièce de garniture acoustique multicouche selon l'une quelconque des revendications précédentes comme une pièce de garniture intérieure, par exemple comme une tablier interne, comme une partie d'un système de plancher intérieur, ou comme un revêtement intérieur de logement de roue ou comme un habillage acoustique, ou comme une pièce de garniture de compartiment moteur, par exemple un revêtement de capot ou une tablier externe.

Fig. 1

Fig. 2

Fig. 3

Fig. 4

Fig. 5

**EP 3 354 454 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016166218 A1
- EP 934180 A

- EP 2640881 A